# EUROPEAN PATENT APPLICATION

(11) **EP 4 213 291 A2**
(43) Date of publication of application: **19.07.2023**
(21) Application number: 23150341.8
(22) Date of filing: 04.01.2023
(51) Int. Cl.: H01M 50/503, H01M 50/516, H01M 10/6235, H01M 50/247, H01M 50/284, H01M 50/213, H01M 10/613, H01M 10/6562, H01M 10/653, H01M 10/6551

(54) **BATTERY PACK AND COLLECTOR PLATE ASSEMBLY FOR BATTERY PACK**

(30) Priority: 12.01.2022 CN 202210033138
(71) Applicant: Techtronic Cordless GP, Anderson, SC 29621 (US)
(72) Inventor: LIU, Ya Bin, Dongguan City (CN); ZHAO, Jiang, Dongguan City (CN); ZHAO, Jian Guo, Dongguan City (CN)
(74) Representative: Novagraaf Group

(57) **Abstract**

Disclosed in the present invention is a collector plate assembly for a battery pack, wherein the collector plate assembly comprises a collector plate and a collector plate support, the collector plate having a welding part for welding to a terminal of a battery unit, and the collector plate being installed in the collector plate support in such a way that the welding part is exposed by the collector plate support. Also disclosed is a battery pack, comprising: a housing; a battery support, enclosed by the housing and supported in the housing, the battery support being electrically connectable to an electric tool to supply electric power to the electric tool; and a collector plate assembly, comprising a collector plate support and a collector plate installed in the collector plate support.

## Description

### Technical field

The present invention relates to a battery pack, in particular to a battery pack with improved heat management and improved safety. The present invention also relates to a collector plate assembly for a battery pack.

### Background art

The rise of consumer electronics and the energy revolution have spurred the development of lithium ion batteries. As electronic technology develops at the present time, miniaturized devices and tools are steadily increasing in number, market demand for lithium ion secondary batteries is steadily increasing, and industrial output is also steadily increasing. Handheld electric tools in particular have become much more convenient to use due to the development of battery technology; this is because a battery pack comprising rechargeable secondary batteries can be fitted to a handheld electric tool, thus avoiding the need for an electric cable.

Generally, a battery unit used in the battery pack is a secondary battery; such a battery generally uses doped and de-doped lithium ions. Multiple battery units are connected to form a battery support. In general, the battery support is encapsulated in a casing, thereby forming the battery pack. Battery packs comprising battery units such as lithium ion secondary batteries are already widely used in electronic devices (such as personal computers and mobile phones), electric vehicles and electric tools, etc., especially handheld electric tools.

The battery pack might be used for long periods of time, leading to the problem that the battery pack might overheat, so it is necessary to carry away as much of the heat produced by the battery pack as possible. In battery packs in which the battery support is completely encapsulated in the casing, the fact that multiple encapsulation structures are included will result in poor heat dissipation. Furthermore, in the working environment of a handheld electric tool for example, the battery pack will experience a large amount of vibration; such vibration might lead to loosening or even short-circuiting of electric connecting components of the battery pack, and thus might damage the entire battery pack or even cause danger.

In the process of using certain battery packs, water might enter the battery pack. To prevent short circuits and corrosion to cell terminals, the cell terminals need to be sealed and protected. The prior art is not able to solve such problems effectively.

### Summary of the invention

The objective of the present invention is to solve at least some of the abovementioned problems. The present invention proposes a battery pack with improved heat management and improved safety, and a collector plate assembly for the battery pack.

According to one aspect of the present application, a collector plate assembly for a battery pack is disclosed, wherein the collector plate assembly comprises a collector plate and a collector plate support, the collector plate having a welding part for welding to a terminal of a battery unit, and the collector plate being installed in the collector plate support in such a way that the welding part is exposed by the collector plate support. In the present invention, the collector plate assembly as a whole is impermeable to liquids such as water, so prevents corrosion of the battery unit or cell, thus helping to improve the safety of the battery pack.

In an embodiment according to said aspect of the present application, the collector plate and collector plate support are integrally injection moulded together.

In an embodiment according to said aspect of the present application, the collector plate support is provided with a gap in which the collector plate is inserted.

In an embodiment according to said aspect of the present application, the welding part of the collector plate protrudes from a body part of the collector plate, and is substantially flush with a surface of the collector plate support.

In an embodiment according to said aspect of the present application, the collector plate support is provided with an opening corresponding to the welding part of the collector plate, and the collector plate is installed in the collector plate support in such a way that the welding part is exposed by the collector plate support through the opening.

According to another aspect of the present application, a battery pack is disclosed, comprising:
a housing;
a battery support, enclosed by the housing and supported in the housing, the battery support being electrically connectable to an electric tool to supply electric power to the electric tool; and
a collector plate assembly, comprising a collector plate support and a collector plate installed in the collector plate support,
wherein the battery support comprises a battery unit, a battery support body for accommodating the battery unit, and a PCBA fixed to the top of the battery support body; the collector plate is configured to be electrically connected to the battery unit, the housing is fixed to the battery support body to accommodate the PCBA in the housing, the housing is at least partially attached to the collector plate support directly, the collector plate support is coupled to the battery support body directly in a sealed manner, and the collector plate has a welding part, the welding part being welded to a terminal of the battery unit to achieve an electrical connection. In the present invention, the battery support body is directly exposed to the environment at the bottom, a front side and a rear side, with no need for an additional casing or housing; this configuration can reduce costs and helps to improve the heat dissipation performance of the battery pack.

In an embodiment according to said aspect of the present application, the collector plate further comprises a pin extending from a substantially planar body, the welding part protrudes relative to the substantially planar body of the collector plate, and the pin is configured to be electrically connected to the PCBA.

In an embodiment according to said aspect of the present application, the collector plate comprises a connecting fuse part, which melts through to break a circuit when the battery pack experiences a short circuit. The battery pack of the present invention thus has improved safety.

In an embodiment according to said aspect of the present application, the collector plate support is made of a material which is thermally conductive but not electrically conductive, the material preferably being a thermoplastic elastomer. The collector plate support is in direct contact with the collector plate and the corresponding housing, and has good thermal conductivity, so the battery pack has improved heat management.

In an embodiment according to said aspect of the present application, the collector plate comprises multiple collector plates electrically isolated from each other, and the collector plate support is insert-moulded onto the multiple collector plates and keeps the multiple collector plates electrically isolated from each other. Thus, the fact that the collector plates are electrically isolated from each other avoids the danger of battery units short-circuiting or even the entire battery pack being damaged due to electrical connections between the collector plates.

In an embodiment according to said aspect of the present application, the housing comprises an upper housing, the upper housing comprising a front opening and/or a rear opening allowing cooling air to enter, and an opening located at the top; and the cooling air leaves the battery pack through the opening located at the top after cooling the PCBA and an outer wall of the battery support body. Thus, the battery pack can be fully cooled, to avoid the problem of battery pack damage caused by overheating of the battery pack and electronic devices such as the PCBA.

In an embodiment according to said aspect of the present application, the battery support body is an integrally formed plastic member, and preferably, a rearward-sunk cooling slot and an upward-sunk cooling slot are provided at a front part and a bottom part of the battery support body respectively. The cooling slots help to improve heat dissipation from the battery pack.

In an embodiment according to said aspect of the present application, the battery support further comprises a sealing ring, which is disposed around the periphery of a side part of the battery support body and between the battery support body and the collector plate, to form a seal between the battery support body and the collector plate. Such a seal helps to prevent foreign matter such as liquid or dust from entering the battery unit or collector plate, thus further improving the safety of the battery pack.

In an embodiment according to said aspect of the present application, the battery pack further comprises an NB-IoT module located in a space enclosed by the housing and the battery support body, the NB-IoT module being electrically connected to the PCBA, thus enabling remote monitoring of a state of the battery pack in real time. In the present application, the use of an IoT module in the battery pack makes it easier to manage the battery pack more effectively and respond promptly to battery pack states.

In an embodiment according to said aspect of the present application, the NB-IoT module comprises a cover, a chipset and a slide groove, the chipset being electrically connected to the PCBA, and the cover being removable to allow a sim card to be inserted with the chipset into the battery pack along the slide groove. That is to say, the NB-IoT module employs a modular design, realizing IoT functionality without significantly altering the battery pack design, and facilitating maintenance and updating of battery packs on a large scale.

In an embodiment according to said aspect of the present application, the battery support body comprises a channel wall exposed to the environment, and a cooling fin is provided on the channel wall exposed to the environment. Such a cooling fin further facilitates heat dissipation.

In an embodiment according to said aspect of the present application, the housing comprises a left housing and a right housing, which are directly coupled to the battery support body by means of the collector plate support. Thus, heat from the battery unit can be directly conducted out more quickly.

In an embodiment according to said aspect of the present application, the battery support body is formed as a lower housing of the battery pack. Thus, the heat of the battery unit is dissipated into the environment directly through the battery support body.

Other features and advantages of the present invention will become obvious through perusal of the following detailed description with reference to the drawings.

### Brief description of the drawings

The objective and features of the present invention will become obvious from the following detailed description considered in conjunction with the drawings. However, it should be understood that the drawings are designed purely for illustrative purposes, and do not limit the present invention.
Fig. 1 shows a schematic perspective view of a battery pack according to an embodiment of the present invention.
Fig. 2 shows a partial exploded schematic perspective view of a battery pack according to an embodiment of the present invention, showing the battery support, upper housing, left housing and right housing.
Fig. 3 shows a partial exploded schematic perspective view of the battery support of Fig. 2 according to an embodiment of the present invention, showing the battery units, battery support body, metal collector plate, collector plate support, PCBA and NB-IoT module.
Fig. 4 shows an exploded schematic drawing of a collector plate and a collector plate support, and Fig. 4a shows a schematic front view and a sectional view of a collector plate assembly comprising a collector plate and a collector plate support according to an embodiment of the present invention.
Fig. 5 shows a partial sectional view of a battery pack according to an embodiment of the present invention, showing the positional and connection relationships between the various components of the battery pack.
Fig. 6 shows a partial exploded schematic perspective view of a battery pack according to an embodiment of the present invention, showing heat management and sealing between the various components of the battery pack.
Fig. 7 shows a schematic perspective view of part of a battery pack according to an embodiment of the present invention, showing the principle of air cooling; and
Fig. 8 shows a perspective view of a battery support body according to an embodiment of the present invention.

### Detailed description of embodiments

The technical solution of the present application is described clearly and completely below with reference to the drawings; obviously, the embodiments described are some, not all, of the embodiments of the present application. Based on the embodiments in the present application, all other embodiments obtained by those skilled in the art without expending inventive effort shall fall within the scope of protection of the present application.

In the description of the present application, it must be explained that unless otherwise explicitly specified and defined, terms such as "connected" should be understood in a broad sense, e.g. may refer to fixed connection, removable connection or integral connection; mechanical connection or electrical connection; and direct connection or indirect connection via an intermediate medium. To a person skilled in the art, the specific meanings of such terms in the present application may be understood according to the particular circumstances. Furthermore, in the description of the present application, unless otherwise stated, the meaning of "multiple" is two or more. It must also be understood that orientational or positional relationships indicated by terms such as "centre", "longitudinal", "transverse", "up", "down", "front", "rear", "left", "right", "vertical", "horizontal", "top", "bottom", "inner", "outer", "axial", "radial" and "circumferential" are based on the orientational or positional relationships shown in the drawings, and are merely intended to facilitate and simplify description of the present application, without indicating or implying that the apparatus or element in question must have a specific orientation or be constructed and operated in a specific orientation, so must not be construed as limiting the present application.

In the description of this specification, the description of reference terms such as "an embodiment", "some embodiments", "example", "specific example" or "some examples" means that the specific feature, structure, material or characteristic described in conjunction with said embodiment or example is included in at least one embodiment or example of the present application. In this specification, a schematic representation of said terms does not necessarily refer to the same embodiment or example. Furthermore, specific described features, structures, materials or characteristics may be suitably combined in any one or more embodiments or examples.

To make it easier for those skilled in the art to understand the technical solution of the present invention, said technical solution is now explained further with reference to the accompanying drawings, in which identical reference labels denote identical or similar elements.

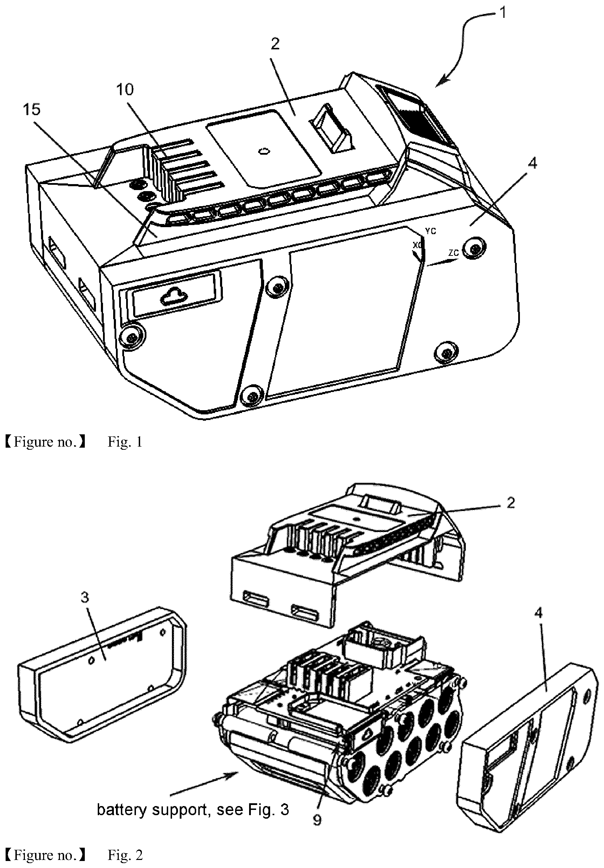

Fig. 1 shows a schematic perspective view of a battery pack 1 according to an embodiment of the present invention. Fig. 2 shows a partial exploded schematic perspective view of the battery pack 1 according to an embodiment of the present invention, showing a battery support and a housing enclosing the battery support. In a schematic embodiment, the housing comprises an upper housing 2, a left housing 3 and a right housing 4.

Referring to Figs. 1 and 2, these show a battery pack 1 in an embodiment of the present invention, comprising a battery support and a housing enclosing the battery support. In an embodiment of the present invention, the housing may comprise an upper housing 2, a left housing 3 and a right housing 4. The upper housing 2, left housing 3 and right housing 4 are connected to the battery support by fasteners such as screws. It will be understood that the housing may be configured according to requirements, e.g. configured as an upper/lower housing structure.

In an embodiment of the present application, the battery pack is a rechargeable battery pack, preferably a lithium ion battery pack. The battery pack 1 comprises at least one battery unit. In a preferred embodiment, the battery pack 1 comprises a total of 10 battery units 11, but the present application may of course use a larger or smaller number of battery units. In an embodiment of the present invention, the 10 battery units are battery units with exactly the same parameters such as capacity, and are electrically connected in series/parallel to provide a more stable power supply. Of course, it is also possible to use different numbers of battery units, connected in series, in parallel or in series/parallel, etc. in different ways, without departing from the scope of the present invention. In an embodiment of the present invention, the battery unit is a lithium ion secondary battery unit. For example, in an embodiment of the present invention, graphite or hard carbon black or soft carbon black is used for a negative electrode of the lithium ion secondary battery unit, and a lithium oxide such as LCO, NMC or NCA is used for a positive electrode, the lithium ion secondary battery unit having a nominal voltage of 3.6 V. As examples, a positive electrode active substance used in the battery unit comprises a ternary material, an NCA material, lithium ion phosphate, lithium cobalt oxide or lithium manganese oxide; a negative electrode active substance used in the battery unit comprises lithium titanate, graphite or low-crystallinity carbon such as soft carbon black or hard carbon black.

As shown in Fig. 1, the top of the upper housing 2 has a battery plug 10, for electrically connecting the battery pack to an electrical device or a charger. The electrical device may be an electric tool, so the battery pack may supply electric power to the electric tool. The electric tool is for example a handheld electric tool, which includes electric drills, grinders, cutters, etc., and various gardening tools, including electric lawnmowers, hedge trimmers, electric blowers, etc. In an embodiment, the upper housing 2 is provided with slide grooves 15 at two sides of the charging plug 10 in the length direction thereof, the slide grooves facilitating electric tool insertion. In an embodiment of the present invention, a locking structure 14 for locking to the electric tool is provided at the top of the battery pack 1. Once the battery pack 1 has been inserted via the slide grooves 15 thereof into place in the electric tool, the locking structure 14 locks the battery pack 1 to the electric tool, to prevent the battery pack 1 from falling off the electric tool accidentally.

Fig. 2 shows a partial exploded schematic drawing of a battery pack in an embodiment of the present invention. A battery support body 5 is used to accommodate multiple battery units (cells). In this embodiment, the battery support body 5 forms a bottom part of the housing, and could also be said to be formed as a lower housing itself. When battery units (not shown) have been accommodated in the battery support body 5, a collector plate (not shown) is used to connect the battery units together. The left and right housings 3, 4 are installed at left and right sides of the battery support body 5, thereby fixedly installing the battery units in the battery pack. A PCBA is installed on the battery support body 5. Since the battery support body 5 is in direct contact with the outside, the battery support body 5 can dissipate heat of the battery units into the air directly, thus improving the ability of the battery pack to dissipate heat. As shown in the figures, the lower housing is mainly formed by the battery support body 5.

As stated above, the housing may also be configured as an upper/lower structure, i.e. comprises an upper housing and a lower housing. In this case, the upper housing comprises the battery plug. The battery support body may be installed in the lower housing by insertion, with the lower housing then being closed by the upper housing to form the battery pack.

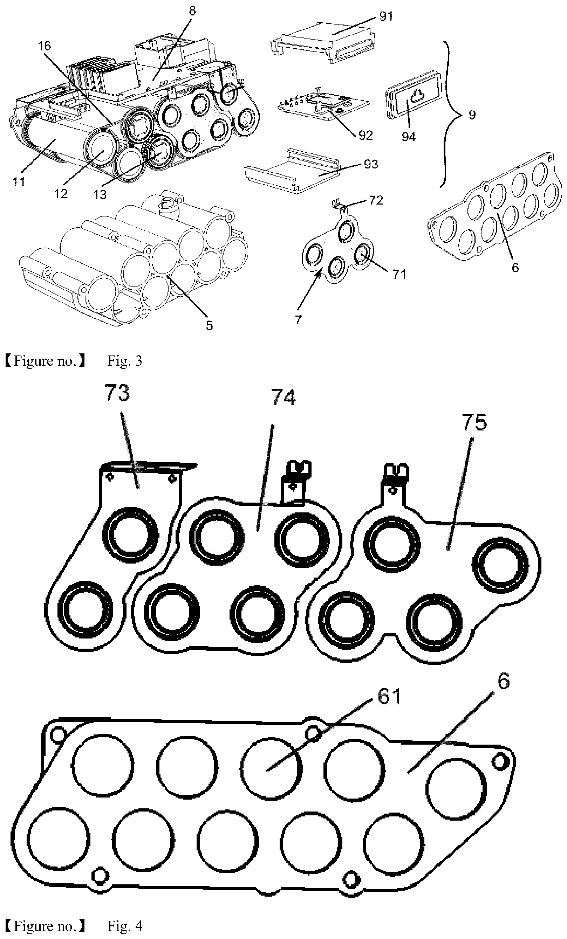

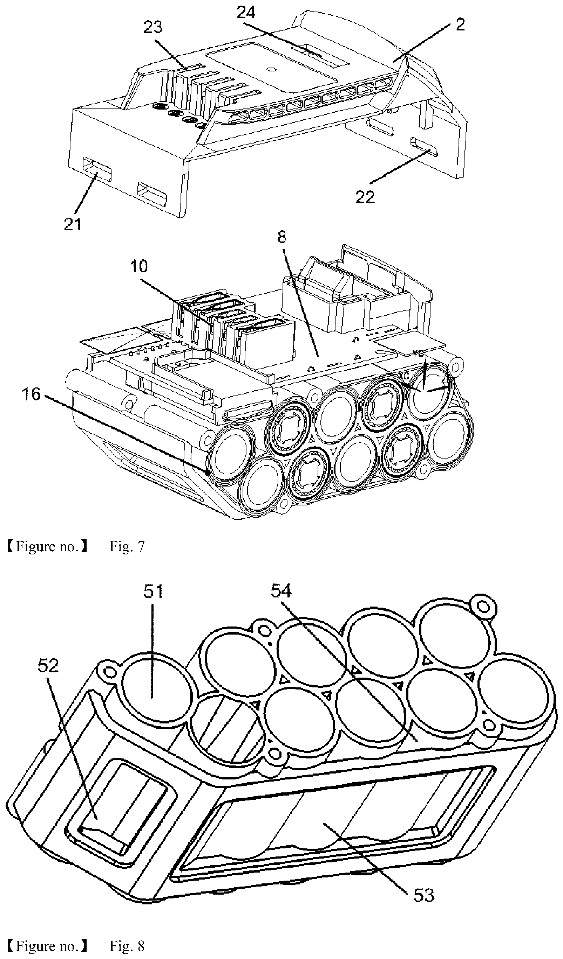

Fig. 3 shows a partial exploded schematic perspective view of the battery support of Fig. 2 according to an embodiment of the present invention, showing the battery units 11, the battery support body 5, a metal collector plate 7, a collector plate support 6, the PCBA 8 and an NB-IoT module 9. Referring to Fig. 3, in an embodiment of the present invention, the battery support comprises the battery support body 5, multiple battery units 11 installed in the battery support body 5, the metal collector plate 7, the collector plate support 6, the PCBA 8 and the NB-IoT module 9. In an embodiment of the present invention, the battery support body 5 is an integrally formed plastic member. Referring to Fig. 7, the battery support body 5 comprises multiple channels 51 for insertion of the battery units 11; in the embodiment of Fig. 7, there are 10 channels in total.

In an embodiment of the present invention, the collector plate 7 is used to connect electrode terminals of the battery units together electrically and/or to connect the electrode terminals to the PCBA; preferably, the collector plate 7 is electrically connected by laser welding to the electrode terminals of the battery units 11, e.g. negative electrode terminals 12 or positive electrode terminals 13. In an embodiment of the present invention, the collector plate 7 is inserted into the collector plate support 6. In an embodiment of the present invention, the collector plate support 6 is provided with a gap, and the collector plate 7 is inserted in the gap. In another preferred embodiment, the collector plate support 6 is insert-moulded onto the collector plate 7. The collector plate support 6 may be made of a material which is thermally conductive but not electrically conductive. Preferably, the collector plate support 6 is made of an elastomeric material such as a thermoplastic elastomer, and has a certain degree of elasticity so as to help form a seal between the battery support body and the left housing 3 and/or right housing 4 when the left housing 3 and/or right housing 4 is/are fixed to the battery support body, thereby preventing liquid or dust, etc. from contacting the electrode terminals of the battery units, effectively protecting the battery units, ensuring the safety of the battery pack and increasing the battery pack's life.

Continuing to refer to Fig. 3, the PCBA 8 is disposed at one end of the top of the battery support body 5, and the width of the PCBA 8 is slightly less than the width of the battery support body 5. A control circuit for controlling the operation of the battery pack is provided on the PCBA 8. Each collector plate 7 comprises protrusions 71 or welding parts protruding relative to a substantially planar body thereof, and a pin 72 extending from the substantially planar body. In an embodiment of the present invention, the collector plate support 6 comprises multiple openings 61; the openings 61 correspond to the protrusions 71, and the protrusions or welding parts are revealed or exposed through the openings in the insert-moulding process. Thus, the protrusions 71 are configured to be firmly connected electrically to the electrode terminals of the battery units 11, e.g. the negative electrode terminals 12 and/or positive electrode terminals 13, by a process such as laser welding. The pin 72 is configured to be electrically connected to the PCBA 8, so as to realize power supply management of the battery pack via the PCBA 8.

Continuing to refer to Fig. 3, in an embodiment of the present invention, the battery support further comprises the NB-IoT module 9. The NB-IoT (Narrow Band Internet of Things), also called NBIOT, is constructed in a cellular network, only consumes about 180 Khz of bandwidth, uses a licensed frequency band, can be deployed in three ways, namely in-band, guard-band or standalone, and coexists with existing networks. It can be directly deployed in the GSM network, UMTS network or LTE network, to reduce deployment costs and enable smooth upgrades. The NB-IoT module is one type of IoT module, but the present application is not limited to the NB-IoT module, and may use another module such as a 4G module instead of the NB-IoT module. In a preferred embodiment of the present invention, the battery pack further comprises a Bluetooth module. In a preferred embodiment of the present invention, the battery pack further comprises a BLE-IoT module. The BLE-IoT module is a Bluetooth IoT with low energy consumption. The NB-IoT module 9 is electrically connected to the PCBA 8 and may be connected to another apparatus wirelessly for example, thus enabling remote data transmission and remote real-time monitoring of the state of the battery pack, and facilitating remote control/maintenance of the battery pack as well as maintenance and updating of battery packs on a large scale. In an embodiment of the present invention, the NB-IoT module 9 comprises an upper cover 91, a chipset 92 and a lower cover 93. The upper cover 91 and lower cover 93 form an installation chamber, in which the chipset 92 may be installed. The NB-IoT module 9 may be removably fitted to the PCBA 8, such that the chipset 92 is electrically connected to the PCBA via an interface (not shown) to realize communication. Referring to Fig. 2, the right housing 4 comprises an opening 41, and the NB-IoT module 9 may be inserted into the battery pack or removed from the battery pack through the opening 41. The opening 41 may be covered by a closing member 94, to protect the NB-IoT module 9. When the NB-IoT module 9 needs to be replaced or removed, the closing member 94 is taken off first, then the NB-IoT module 9 is pulled out of the battery pack through the opening 41. In an embodiment, the closing member 94 may be made of an elastic plastic. In a preferred embodiment of the present invention, the NB-IoT module 9 employs a cover-free design. In a preferred embodiment of the present invention, the NB-IoT module employs low-pressure injection-moulding TPE encapsulation or a moulding process to realize a cover-free design. In a preferred embodiment of the present invention, the NB-IoT module is realized using a soft polyurethane potting (soft PU-potting) process, and realizes a cover-free design by integral potting.

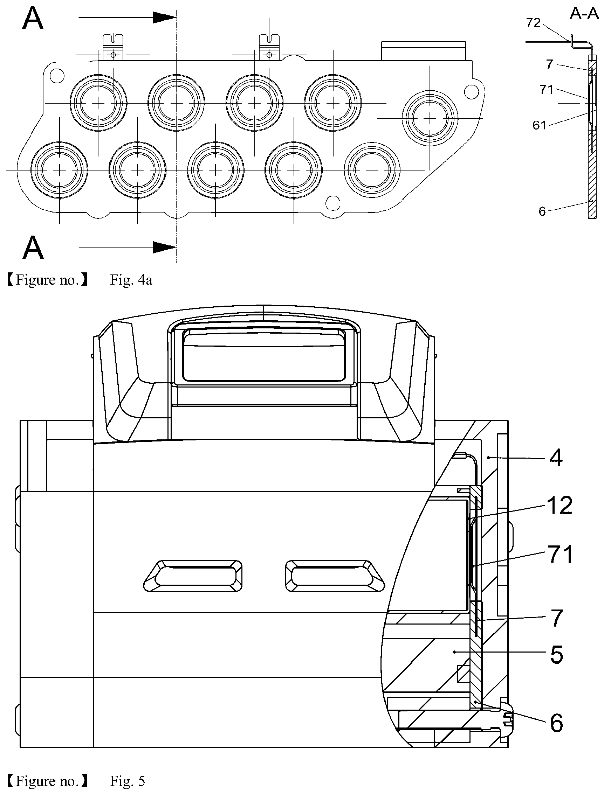

Continuing to refer to Fig. 3 in conjunction with Figs. 4 and 4a, Fig. 4 shows an exploded schematic drawing of a collector plate and a collector plate support, and Fig. 4a shows a schematic front view and a sectional view of a collector plate assembly comprising a collector plate and a collector plate support according to an embodiment of the present invention. Fig. 4 shows a schematic drawing of a collector plate assembly comprising the collector plate 7 and collector plate support 6 according to an embodiment of the present invention; the collector plate 7 may comprise at least one collector plate, for example may comprise a first collector plate 73, a second collector plate 74 and a third collector plate 75. These collector plates 7 connect multiple battery units 11 (10 in this embodiment) together electrically, and the collector plates 7 are sealed well when installed between the battery support 5 and the collector plate support 6. The collector plates 7 have welding parts 71 configured to be welded to the terminals of the battery units; as shown in Fig. 4, the collector plate support 6 is provided with openings 61 corresponding to the welding parts of the collector plates, and the collector plates 7 are installed in the collector plate support 6 in such a way that the welding parts 71 are exposed by the collector plate support 6 through the openings 61.

In an embodiment of the present invention, the collector plate support 6 is made of an elastic sealing material. In an embodiment of the present invention, the collector plate support 6 is made of a thermally conductive material. The collector plate support protects the battery units disposed inside the battery support from corrosion. In an embodiment of the present invention, the collector plate support is manufactured as a single piece, thus reducing the process assembly costs and manufacturing costs. In an embodiment of the present invention, a collector plate 7 with high electrical conductivity may be used; this can further reduce collector plate heating. In an embodiment of the present invention, the collector plate 7 has high weldability; this can reduce the electrical resistance of welding contact parts. The collector plate 7 preferably has high thermal conductivity; this can increase its heat conduction efficiency. In an embodiment of the present invention, the material properties of the collector plate support and collector plate can significantly reduce the internal resistance of the battery pack and reduce its energy loss. By using the collector plate support and collector plate, the internal electrical design of the battery pack can be optimized, thus reducing the process assembly costs and manufacturing costs. In an embodiment of the present invention, by using the collector plate support and collector plate, the electrical properties and the overall thermal balance of the battery pack can be improved. In an embodiment of the present invention, by using the collector plate support and collector plate, the overall energy output of the battery pack can be increased, the overall battery pack cycle life can be increased, and the customer's user experience can be improved.

In an embodiment of the present invention, the collector plate support 6 is a single component made of a plastic material. The collector plate support is provided with a gap, in which the collector plate is inserted.

As shown in Figs. 4 and 4a, the collector plate support is provided with openings 61 corresponding to the welding parts of the collector plate; the purpose of the openings is to allow a welding head or laser head (not shown) of a welding tool to pass through the openings 61 to weld the collector plate to the terminals of the battery units. Those skilled in the art will understand that this may be achieved through various welding techniques.

In the drawings, the collector plate connects the terminals of 2 or 4 battery units. However, it will be understood that the collector plate may also connect the terminals of one or another number of battery units as required. The size of the collector plate may be configured appropriately according to the number of terminals of battery units to be connected. In Fig. 4a, the collector plate support is configured as a single piece, i.e. the collector plate support accommodates multiple collector plates; this helps to reduce the number of installation process steps, thereby improving production efficiency. However, it is also possible to provide a corresponding collector plate support for each collector plate. Since the housing can press the collector plate support against the battery support body 5, and the collector plate support may be formed of an elastic material, the housing and the battery support body 5 can clamp the collector plate support, so the collector plate support and the corresponding collector plate can still seal the terminals of the corresponding battery units.

Preferably, the collector plate has no gaps at the welding parts thereof, so the welding parts can block the terminals of the battery units.

In an embodiment, the collector plate support has a gap, such that the collector plate can be inserted into the gap of the collector plate support, so that the welding parts of the collector plate are exposed through the openings 61 of the collector plate support. Since the collector plate support is formed of an elastic material, a seal is substantially formed between the inserted collector plate and the collector plate support. As shown in the figures, the welding parts of the collector plate are formed by protrusions 71, which protrude from a body part of the collector plate and are substantially flush with a surface of the collector plate support. A collector plate assembly is thereby formed. When installation is performed, the battery units are first installed in the battery support body, then the collector plate welding parts are welded to the terminals of the battery units, then the housing is installed in such a way as to offset the collector plate support, to achieve sealing of the terminals of the battery units.

In another embodiment, the collector plate and collector plate support are integrally formed by injection moulding. For example, the collector plate is placed in a mould, then a molten elastomeric material (e.g. a thermoplastic elastomer TPE, TPR, TPU, TPO, TPV, etc.) is injected, such that the collector plate is moulded in the elastomeric material, thereby obtaining a collector plate assembly as shown in Fig. 4a. Similarly, the welding parts of the collector plate protrude from the body part of the collector plate, and are substantially flush with a surface of the collector plate support. Better sealing performance is thus provided between the collector plate and the collector plate support.

A sectional view of a collector plate assembly 6 is also shown in Fig. 4a, wherein the collector plate 7 is injection moulded into the collector plate support 6. The welding parts 71 of the collector plate 7 are located in the openings 61 of the collector plate support 6, and the welding parts 71 protrude from the body part of the collector plate 7 and are flush with a surface of the collector plate support 6; in this way, an integral body is formed to facilitate sealing of the battery units.

In the embodiment of Fig. 5, the collector plate assembly substantially covers an open end (i.e. a side face) of the battery support body 5, and the left and right housings need only press the periphery of the collector plate support against the battery support body in order to achieve a good sealing result. Liquid such as water that seeps into/enters the battery pack cannot contact the terminals of the battery units, so corrosive oxidation of the terminals and short circuits between the terminals are prevented, thus increasing the safety and durability of the battery pack.

In a preferred embodiment, a sealing element is provided at the periphery of a side part of the battery support 5 to achieve better sealing, such that the terminals of the battery units 11 will not come into contact with liquid that enters the battery pack, thus avoiding oxidation and corrosion of the terminals. The collector plate support 6 is a novel proposition of the present invention. The collector plate is at least able to block the openings 61 in the collector plate support which correspond to the welding parts of the collector plate, to prevent liquid from entering through the openings 61 and contacting the terminals of the battery units. In an embodiment of the present invention, as shown in Figs. 3 and 7, the sealing element is a closed sealing ring 16, which may be a single sealing ring formed integrally for all of the battery units (as shown in Fig. 7), or may have one sealing ring for each battery unit, or may be formed as a single sealing ring around the entire periphery, for forming a press-fit with the collector plate support, thereby achieving sealing.

In an embodiment, the metal collector plate 7 may comprise a connecting fuse part; when the battery pack is in a short-circuit state, the metal collector plate made of a low-melting-point alloy will melt through at the connecting fuse part, thus achieving a short circuit protection function. The connecting fuse part may be disposed at a part of the collector plate that is connected to the PCBA, or may be disposed at a connecting part between the welding parts. At the same time, because the resistance of the metal collector plate will be higher at the connecting fuse part, the metal collector plate will melt through at the connecting fuse part first, thus achieving the short circuit protection function, and thereby preventing damage to the entire battery pack due to a short circuit. In an embodiment of the present invention, the first collector plate 73, second collector plate 74 and third collector plate 75 are spaced apart so as to be electrically isolated, and the collector plate support 6 is insert-moulded onto the first collector plate 73, the second collector plate 74 and the third collector plate 75 and keeps these collector plates electrically isolated. Thus, the collector plate support 6 keeps the collector plates firmly fixed to itself, and prevents the collector plates from loosening due to vibration, etc. during operation, which might result in electrical connections forming between the collector plates; thus, damage to the battery units due to short circuits is prevented.

Fig. 5 is a partial view of an embodiment of the present invention, showing part of the assembled battery pack. In Fig. 5, the negative electrode terminal 12 of the battery unit 11 is welded to the welding part 71 of the collector plate 7 to form an electrical connection. The collector plate 7 is inserted in the collector plate support 6 in such a way that the welding part 71 thereof is exposed by the collector plate support 6. A sealing element is provided between the battery support body 5 and the collector plate support 6, for example the sealing ring 16 shown in Figs. 3 and 7, to completely seal the battery units within it. The housing (e.g. the right housing 4) is attached to the battery support body 5 by means of fasteners, with the collector plate support 6 disposed between the housing and the battery support body 5.

When installation is performed, the battery unit 11 is first installed in the battery support body 5, then the welding part 71 of the collector plate 7 of the collector plate assembly is welded to the terminal of the battery unit 11 (e.g. the negative electrode terminal 12 in Fig. 5), then the housing 4 is installed in such a way as to offset the collector plate support 6. The sealing element is disposed between the battery support body 5 and the collector plate support 6, and the collector plate assembly is itself a leakproof integral structure, so the battery unit 11 disposed in the battery support body 5 is protected to achieve a good sealing result. Thus, liquid such as water that seeps into/enters the battery pack cannot contact the terminals of the battery units, so corrosive oxidation of the terminals and short circuits between the terminals are prevented, thus increasing the safety and durability of the battery pack.

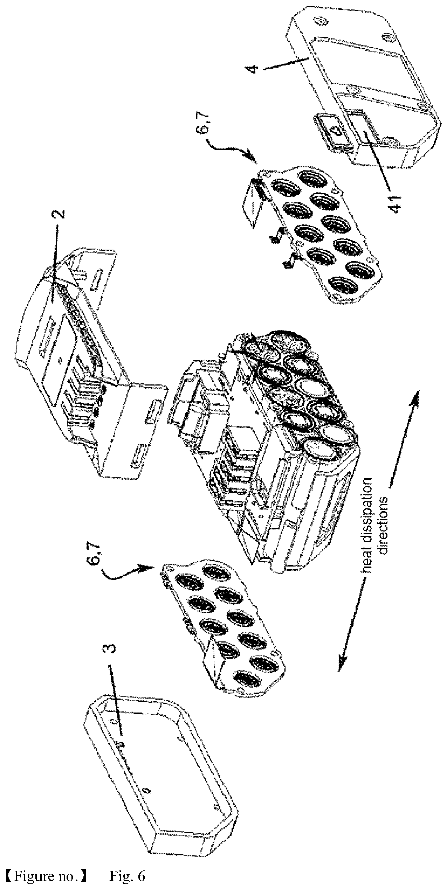

Fig. 6 shows a partial exploded schematic perspective view of the battery pack 1 according to an embodiment of the present invention, showing heat management and sealing between the various components of the battery pack 1. Referring to Fig. 6, this shows a partial exploded schematic perspective view of the battery pack 1 according to an embodiment of the present invention, showing heat management and sealing between the various parts of the battery pack 1. As shown in Fig. 6, the collector plate supports 6 are located between the battery support body 5 and the right housing 4 or left housing 3; the collector plate supports 6 are in direct contact with the right housing 4 or left housing 3, and the collector plate supports and housings are all made of a material with good thermal conductivity, to help lead out the heat generated in the battery pack. As shown in Fig. 6, heat is transferred from the battery units 11 towards the collector plates 7 located at the left and right sides; the collector plates 7 are in direct contact with the collector plate supports 6, and the collector plate supports 6 are in direct contact with the right housing 4 or left housing 3, thus helping to dissipate heat quickly. In an embodiment, the battery support body 5 forms part of the housing, and the battery support body 5 can dissipate heat generated by the battery units into the environment. It will be understood that the battery support body 5 may be made of a material with a high heat dissipation coefficient.

Fig. 7 shows a schematic perspective view of part of the battery pack 1 according to an embodiment of the present invention, showing the principle of air cooling. As shown in Fig. 7, the upper housing 2 comprises front openings 21, rear openings 22, and openings 23 and 24 located at the top; the upper housing 2 may of course comprise a larger or smaller number of openings. In the embodiment of Fig. 7, the openings 23 are located close to the battery plug 10, and the opening 24 is located close to the locking structure 14. In the embodiment of Fig. 7, there are two front openings 21 and two rear openings 22; cooling air enters the battery support through these front openings 21 and rear openings 22, cools the PCBA 8 and associated electronic devices, and then leaves the battery support through the openings 23 and 24.

Fig. 8 shows a perspective view of the battery support body 5 according to an embodiment of the present invention. In an embodiment of the present invention, the battery support body 5 comprises a front opening 52 and a bottom opening 53. As described above, the battery support body 5 comprises multiple channels 51 for insertion of the battery units 11; the channels 51 run through a body of the battery support body 5 transversely, and the channels 51 are formed in the shape of cylinders defined by channel walls 54. The front opening 52 and bottom opening 53 expose the channel walls 54 of the channels 51 accommodating the battery units. At the front opening 52 and bottom opening 53, the channel walls 54 can dissipate the heat of the battery units into the environment directly. Thus, such a design is conducive to the forward transfer of heat through the front opening 52 and the downward transfer of heat through the bottom opening 53, and is thus conducive to rapid heat dissipation from the battery units 11 accommodated in the channels 51. When the technical solution described above is adopted, the front opening 52 and bottom opening 53 can improve the effectiveness of heat dissipation from the battery pack, helping to reduce the temperature in the battery pack. In an embodiment, cooling fins may also be provided on the exposed channel walls, to increase the heat dissipation area and improve the heat dissipation efficiency.

Although the description herein is based on embodiments, it is by no means the case that each embodiment comprises only one independent technical solution. This manner of presentation is adopted herein purely for the sake of clarity. Those skilled in the art should consider the specification in its entirety; the technical solutions in different embodiments may also be suitably combined to form other embodiments understandable to those skilled in the art. The scope of the present invention is defined by the attached claims, rather than by the above description. Thus, it is intended that all modifications falling within the meaning and scope of equivalent key elements of the claims shall be included in the present invention.

To a person skilled in the art, the present invention is not limited to the details of the demonstrative embodiments above, and may be implemented in other specific forms without deviating from the spirit or basic features of the present invention. Thus, the above embodiments should be regarded as demonstrative and non-limiting.

## Claims

1. Collector plate assembly for a battery pack, wherein the collector plate assembly comprises a collector plate and a collector plate support, the collector plate having a welding part for welding to a terminal of a battery unit, and the collector plate being installed in the collector plate support in such a way that the welding part is exposed by the collector plate support.

2. Collector plate assembly according to Claim 1, wherein the collector plate and collector plate support are integrally injection moulded together.

3. Collector plate assembly according to Claim 1 or 2, wherein the collector plate support is provided with a gap in which the collector plate is inserted.

4. Collector plate assembly according to Claim 1 or 2, wherein the welding part of the collector plate protrudes from a body part of the collector plate, and is substantially flush with a surface of the collector plate support.

5. Collector plate assembly according to Claim 1 or 2, wherein the collector plate support is provided with an opening corresponding to the welding part of the collector plate, and the collector plate is installed in the collector plate support in such a way that the welding part is exposed by the collector plate support through the opening.

6. Battery pack, comprising:
a housing;
a battery support, enclosed by the housing and supported in the housing, the battery support being electrically connectable to an electric tool to supply electric power to the electric tool; and
a collector plate assembly, comprising a collector plate support and a collector plate installed in the collector plate support,
wherein the battery support comprises a battery unit, a battery support body for accommodating the battery unit, and a PCBA fixed to the top of the battery support body; the collector plate is configured to be electrically connected to the battery unit, the housing is fixed to the battery support body to accommodate the PCBA in the housing, the housing is at least partially attached to the collector plate support directly, the collector plate support is coupled to the battery support body directly in a sealed manner, and the collector plate has a welding part, the welding part being welded to a terminal of the battery unit to achieve an electrical connection.

7. Battery pack according to Claim 6, wherein the collector plate further comprises a pin extending from a substantially planar body, the welding part protrudes relative to the substantially planar body of the collector plate, and the pin is configured to be electrically connected to the PCBA.

8. Battery pack according to Claim 6 or 7, wherein the battery pack comprises at least one of the following:
a) the collector plate comprises a connecting fuse part, which melts through to break a circuit when the battery pack experiences a short circuit;
b) the collector plate support is made of a material which is thermally conductive but not electrically conductive, the material preferably being a thermoplastic elastomer;
c) the collector plate comprises multiple collector plates electrically isolated from each other, and the collector plate support is insert-moulded onto the multiple collector plates and keeps the multiple collector plates electrically isolated from each other;
d) the housing comprises an upper housing, the upper housing comprising a front opening and/or a rear opening allowing cooling air to enter, and an opening located at the top; and the cooling air leaves the battery pack through the opening located at the top after cooling the PCBA and an outer wall of the battery support body.

9. Battery pack according to Claim 6 or 7, wherein the battery support body is an integrally formed plastic member, and preferably, a rearward-sunk cooling slot and an upward-sunk cooling slot are provided at a front part and a bottom part of the battery support body respectively.

10. Battery pack according to Claim 6 or 7, wherein the battery support further comprises a sealing ring, which is disposed around the periphery of a side part of the battery support body and between the battery support body and the collector plate, to form a seal between the battery support body and the collector plate.

11. Battery pack according to Claim 6 or 7, wherein the battery pack further comprises an NB-IoT module located in a space enclosed by the housing and the battery support body, the NB-IoT module being electrically connected to the PCBA, thus enabling remote monitoring of a state of the battery pack in real time.

12. Battery pack according to Claim 6 or 7, wherein the NB-IoT module comprises a cover, a chipset and a slide groove, the chipset being electrically connected to the PCBA, and the cover being removable to allow an E-sim card to be inserted with the chipset into the battery pack along the slide groove.

13. Battery pack according to Claim 6 or 7, wherein the battery support body comprises a channel wall exposed to the environment, and a cooling fin is provided on the channel wall exposed to the environment.

14. Battery pack according to Claim 6 or 7, wherein the housing comprises a left housing and a right housing, which are directly coupled to the battery support body by means of the collector plate support.

15. Battery pack according to Claim 14, wherein the battery support body is formed as a lower housing of the battery pack.
